(19) **Europäisches Patentamt / European Patent Office / Office européen des brevets**

(11) **EP 3 474 059 A1**

(12) **EUROPEAN PATENT APPLICATION**
published in accordance with Art. 153(4) EPC

(43) Date of publication:
**24.04.2019 Bulletin 2019/17**

(51) Int Cl.:
**G02B 13/02** $^{(2006.01)}$

(21) Application number: **17815417.5**

(86) International application number:
**PCT/JP2017/022757**

(22) Date of filing: **20.06.2017**

(87) International publication number:
**WO 2017/221949 (28.12.2017 Gazette 2017/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.06.2016 JP 2016122608**

(71) Applicant: **Nittoh Inc.**
**Suwa-shi, Nagano 392-0131 (JP)**

(72) Inventor: **SAWAMOTO, Akira**
**Suwa-shi, Nagano 392-0021 (JP)**

(74) Representative: **Körber, Martin Hans**
**Mitscherlich PartmbB**
**Patent- und Rechtsanwälte**
**Sonnenstrasse 33**
**80331 München (DE)**

(54) **IMAGE-CAPTURING OPTICAL SYSTEM AND IMAGE-CAPTURING DEVICE**

(57)     An optical system (10) is an optical system for image capture that consists of a first lens group (G1) that is disposed on an object side and a second lens group (G2) that is disposed on an image plane side, with an aperture stop (St) between the lens groups. The second lens group (G2) includes a first meniscus lens (L9) with negative refractive power that is convex on the image plane side and is disposed closest to the image plane side (12) and a second lens (L8) with negative refractive power that is concave on the image plane side (12) and is disposed adjacent to and facing the first meniscus lens (L9). A radius of curvature RLL1 of a surface on object side (11) of the first meniscus lens (L9) and a radius of curvature RLN2 of a surface on the image plane-side (12) of the second lens (L8) satisfy the condition (1) below.

$$-1.0 < (RLL1+RLN2)/(RLL1-RLN2) < -0.1 \ldots (1)$$

Fig. 1

**Description**

Technical Field

The present invention relates to an optical system for image capture that can be favorably used in an image capture apparatus, such as a camera.

Background Art

Japanese Laid-open Patent Publication No. 2002-107616 discloses an inner-focus lens that is composed of 8 or 9 lenses in three groups that are positive, negative, and positive in order from the object side, where the second lens group integrally moves during focusing and where, by satisfying a predetermined lens configuration and predetermined conditional expressions, it is possible to achieve a compact lens with favorable aberration correction, which is favorable for a camera with a large film size. In more detail, the disclosed lens system is produced by aligning a first lens group, which is fixed, is positive, and in order from the object side is composed of two positive lenses, a negative lens, and a positive lens, a second lens group, which is negative, is composed of a negative lens and a positive lens, and integrally moves during focusing, and a third lens group, which is fixed, is positive, and is composed of a positive lens, a negative lens, and a positive lens.

Summary of Invention

Large image capture elements are starting to be used in image capture apparatuses, such as cameras, resulting in demand for an image-capture lens system (optical system) that has a large image circle so as to be compatible with a large image capture element. Optical systems with a large image circle tend to be large. For this reason, there is demand for the realization of an optical system with a large image circle that has a simple configuration and a compact size.

One aspect of the present invention is an optical system for image capture that consists of a first lens group disposed on an object side with respect to an aperture stop, and a second lens group disposed on an image plane side with respect to the aperture stop. The second lens group includes: a first meniscus lens with negative refractive power that is convex on the image plane side and is disposed closest to the image plane side; and a second lens with negative refractive power that is concave on the image plane side and is disposed adjacent to and facing the object side of the first meniscus lens.

When the lens diameter on the image plane side is increased to increase the image circle, the lens diameter on the object side will become even larger, making it difficult to design a compact optical system. In the present optical system, by disposing a lens with negative refractive power closest to the image plane side, an image circle that is large relative to the lens diameter on the image plane side is obtained. In addition, by disposing a lens with negative refractive power on the image plane side, it is possible to achieve a sufficient distance (back focus) from the optical system to the image plane. On the other hand, if a lens with negative refractive power is disposed on the image plane side, there is a tendency for curvature of field to increase, which is difficult to correct and makes it difficult to dispose a lens with negative refractive power capable of sufficiently expanding the image circle relative to the lens diameter on the image plane side.

In the present optical system, a negative meniscus lens (image plane-side meniscus lens, first meniscus lens) that is convex on the image plane side and is favorable for expanding the image circle is disposed closest to the image plane side and a lens (adjacent lens, second lens) with negative refractive power that is concave on the image plane side is disposed so as to face the first meniscus lens. By consecutively disposing two lenses with negative refractive power on the image plane side, it is possible to achieve sufficient negative refractive power to expand the image circle, a valid number of surfaces for correcting aberration is also achieved, and by disposing facing concave surfaces, it is also possible to suppress increases in the Petzval sum, thereby suppressing the occurrence of curvature of field. Accordingly, it is possible to provide an optical system that has a small lens diameter on the image plane side irrespective of the image circle being large, is compact, and favorably corrects aberration.

A radius of curvature RLL1 of a surface on the object side of the first meniscus lens and the radius of curvature RLN2 of a surface on the image plane side of the second lens may satisfy the condition (1) below.

$$-1.0 < (RLL1 + RLN2)/(RLL1 - RLN2) < -0.1 \ldots (1)$$

When the upper limit of the condition (1) is exceeded, the refractive power of the combination of facing surfaces of the final two lenses on the image plane side is too large, resulting in the back focus BF being too short. On the other hand, when the ratio is below the lower limit of the condition (1), the refractive power of the combination of facing surfaces is insufficient, resulting in the back focus BF being too long. There is also an increase in lens diameter and/or lens length. The upper limit of the condition (1) may be -0.2, which makes it possible to prevent the back focus BF from becoming too short.

The second lens group may include a third lens that has positive refractive power, is convex on the image plane side, and is disposed adjacent to and facing the object side of the second lens. It is possible to provide the optical system where it is possible to further miniaturize the first meniscus lens and where aberration correction is favorable. The third lens may be disposed with a minimum gap (air gap) from the second lens, which makes it possible to provide a compact optical system.

The first lens group may have overall positive refractive power and may include an object-side lens with negative refractive power that is concave on the object side and is disposed most toward (closest to) the object side and a meniscus lens with positive refractive power that is convex on the object side and is disposed adjacent to the object-side lens. The second lens group may have overall negative refractive power. This optical system as a whole is not a retrofocus type, which has a negative-positive power arrangement used in a wide-angle lens or the like, but is a telephoto type (reverse retrofocus type) that has a positive-negative power arrangement which typically has a narrow angle of view. However, in this optical system, the angle of view is increased by using the negative lens that is concave on the object side as the first lens (leading lens) closest to the object side. That is, in this optical system, by taking advantage of the long focal length which is a characteristic advantage of telephoto type systems, it is possible to realize a relatively long back focus. Further, since it is possible to reduce the lens diameter on the image plane side, it is possible also reduce the lens diameter on the object side. Accordingly, it is possible to provide a compact optical system (lens system) that covers a range of focal length from wide angle to a standard condition, and has a large image circle.

In this optical system, an overall length LA of the optical system, an effective diameter De1 on a surface on the object side of the object-side lens, and a back focus BF may satisfy the conditions (2) and (3) below.

$$1.5 < LA/BF < 2.5 \ldots (2)$$

$$0.6 < De1/BF < 1.5 \ldots (3)$$

The lower limit of the condition (2) may be 1.6 and the upper limit may be 2.3. The lower limit of the condition (3) may be 0.8, and the upper limit may be 1.3 or may be 1.1.

The first lens group may include, in order from the object side toward the image plane side, a front group with overall positive refractive power, and a rear group with overall negative refractive power, and the second lens group may have overall positive refractive power. This optical system as a whole is a positive-negative-positive telephoto-type optical system (lens system), and makes it possible to provide an inner focus-type telephoto lens where the rear group of the first lens group moves during focusing. In this optical system also, by reducing the lens diameter on the image plane side, it is possible to also reduce the lens diameter on the object side, making it possible to provide an optical system that is compact as a whole and has a large image circle.

In this optical system, an overall length LA of the optical system, an effective diameter De1 of a surface on the object side of a closest lens (object-side lens) that is disposed closest to the object side in the first lens group, and a back focus BF may satisfy Condition (2') and (3') below.

$$1.5 < LA/BF < 5.0 \ldots (2')$$

$$0.8 < De1/BF < 2.0 \ldots (3')$$

The lower limit of the condition (2') may be 2.0 and the upper limit may be 4.0. The upper limit of the condition (3') may be 1.6.

Another aspect of the present invention is an image capture apparatus including the optical system described above and an image capture element disposed on the image plane side of the optical system. The optical system may be an interchangeable lens and the image capture apparatus may include a digital camera, a video camera, a TV camera and an action camera. Since it is possible to provide the optical system with a large-aperture and compact size, it is possible to miniaturize the image capture apparatus.

Brief Description of Drawings

FIG. 1 depicts an overview of an image capture apparatus including an optical system for image capture.
FIG. 2 depicts lens data of the optical system shown in FIG. 1.
FIG. 3 depicts focal lengths of the optical system shown in FIG. 1.
FIG. 4 depicts various aberrations of the optical system shown in FIG. 1.
FIG. 5 depicts transverse aberrations of the optical system shown in FIG. 1.
FIG. 6 depicts an overview of an image capture apparatus including another optical system for image capture.
FIG. 7 depicts lens data of the optical system shown in FIG. 6.
FIG. 8 depicts focal lengths of the optical system shown in FIG. 6.
FIG. 9 depicts various aberrations of the optical system shown in FIG. 6.
FIG. 10 depicts transverse aberrations of the optical system shown in FIG. 6.
FIG. 11 depicts an overview of an image capture apparatus including yet another optical system for image capture.
FIG. 12 depicts lens data of the optical system shown in FIG. 11.
FIG. 13 depicts focal lengths of the optical system shown in FIG. 11.
FIG. 14 depicts various aberrations of the optical system shown in FIG. 11.
FIG. 15 depicts transverse aberrations of the optical system shown in FIG. 11.
FIG. 16 depicts an overview of an image capture apparatus including yet another optical system for image capture.
FIG. 17 depicts lens data of the optical system shown in FIG. 16.
FIG. 18 depicts focal lengths of the optical system shown in FIG. 16.
FIG. 19 depicts various aberrations of the optical system shown in FIG. 16.
FIG. 20 depicts transverse aberrations of the optical system shown in FIG. 16.

Detail description

First Embodiment

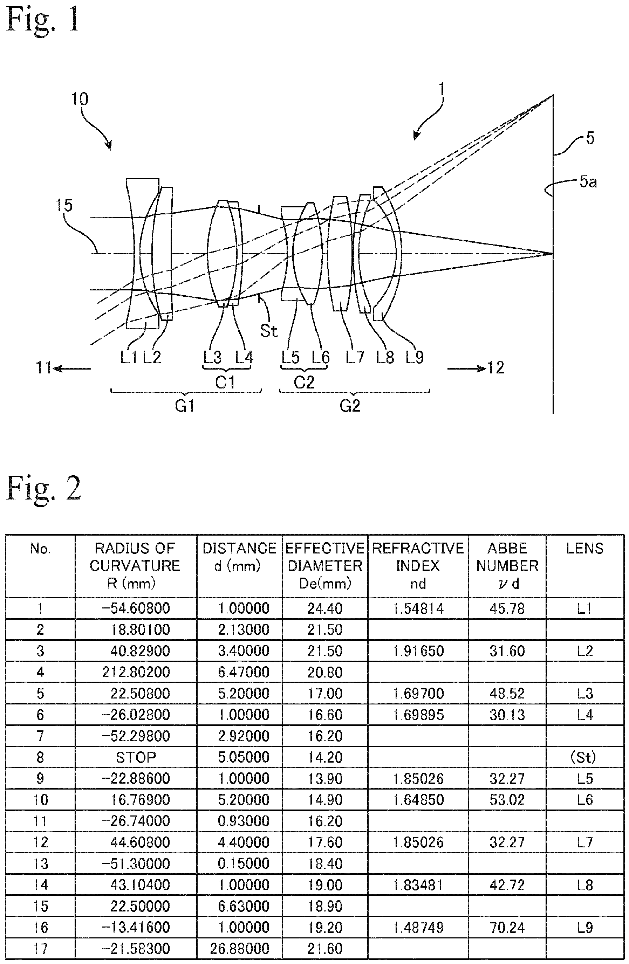

FIG. 1 depicts an example of an image capture apparatus (camera, camera apparatus) with an optical system for image capture. This camera 1 includes an optical system (image capture optical system, image-forming optical system, lens system) 10 and an image capture element (image capture device) 5 disposed on the image plane side (image side, image capture side, image forming side) 12 of the optical system 10. The optical system 10 consists of a first lens group G1, which has overall positive refractive power and is disposed on the object side 11, and a second lens group G2, which has overall negative refractive power and is disposed on the image plane side 12, with an aperture stop (stop) St in between the groups G1 and G2. The first lens group G1 has a four-lenses configuration and includes, along the optical axis 15 in order from the object side 11, a biconcave negative lens (object-side lens) L1, a meniscus lens L2 with positive refractive power that is convex on the object side 11, a biconvex positive lens L3, and a negative meniscus lens L4 that is convex on the image plane side 12. The combination (first combination of lenses) C1 composed of the positive lens L3 and the negative meniscus lens L4 is a cemented lens and is disposed facing the aperture stop St. The meniscus lens L2 that has positive refractive power is disposed adjacent to the negative lens L1 so that part of the object side 11 of the meniscus lens L2 is disposed within the concave portion on the image plane side of the biconcave negative lens L1. In this example, the first lens group G1 consists of four lenses with a symmetrical negative-positive-positive-negative power arrangement.

The second lens group G2 has a five-lenses configuration and includes, along the optical axis 15 in order from the object side 11, a biconcave negative lens L5, a biconvex positive lens L6, a biconvex positive lens (third lens) L7, a meniscus lens (second lens) L8 with negative refractive power that is convex on the object side 11, and a meniscus lens (first meniscus lens) L9 with negative refractive power that is convex on the image plane side 12. The combination (second combination of lenses) C2 composed of the negative lens L5 closest to the object side 11 and the positive lens L6 is a cemented lens and is disposed facing the aperture stop St. In this example, the second lens group G2 consists of five lenses with a relatively symmetrical power arrangement that is negative-positive-positive-negative-negative.

In the optical system 10, during focus adjustment (focusing), the entire optical system, that is, the first lens group G1, the aperture stop St, and the second lens group G2 that are disposed in order from the object side 11, integrally moves with respect to the image plane 5a of the image capture element 5 without changing the air gaps between the group G1, the stop St, and the group G2. The optical system 10 has the first lens group G1, which is negative-positive-positive-negative, and the second lens group G2, which is negative-positive-positive-negative-negative, disposed with the aperture stop St in between and is an optical system with a total of nine lenses in two lens groups that each have a symmetrical power arrangement.

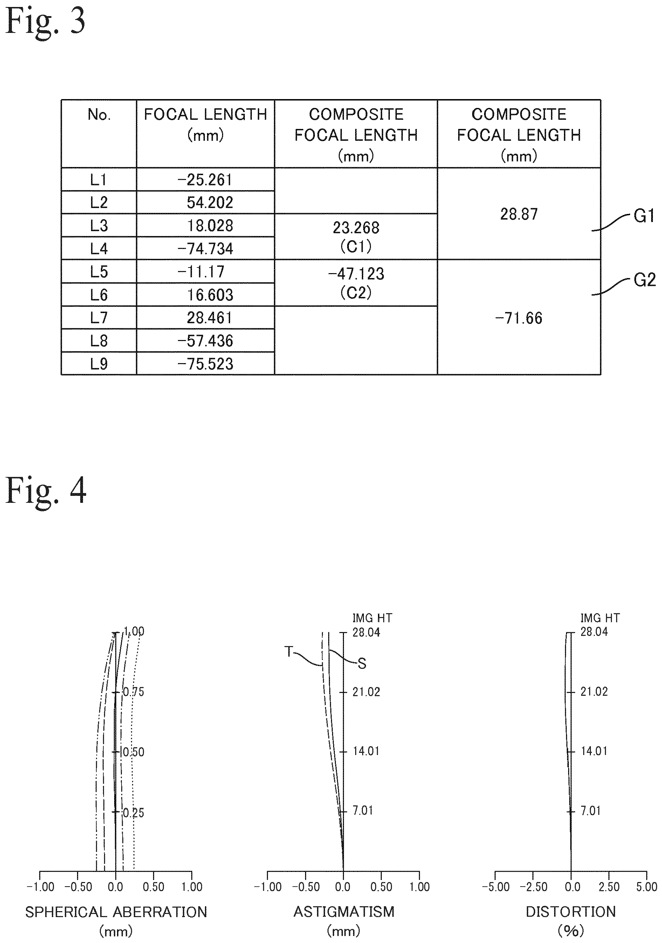

FIG. 2 depicts data on the respective lenses that construct the optical system 10. "Radius of Curvature (R)" indicates the radius of curvature (in mm) of the respective surfaces of the respective lenses disposed in order from the object side 11, "Distance d" indicates the distance (in mm) between the respective lens surfaces, "Effective Diameter De" indicates the effective diameter (in mm) of each lens surface, "Refractive Index nd" indicates the refractive index (d line) of each lens, and "Abbe number vd" indicates the Abbe number (d line) of each lens. Note that the final distance, in the present embodiment "d17", indicates the distance (or back focus "BF") between the optical system 10 and the image capture device 5. FIG. 3 depicts the focal length (mm) of each lens, the composite focal length (mm) of each combination lens (cemented lens), and the composite focal length (mm) of each lens group in d-line. This is also the case for the lens data given later. Note that focal lengths and the like in the present embodiment are found at the d line.

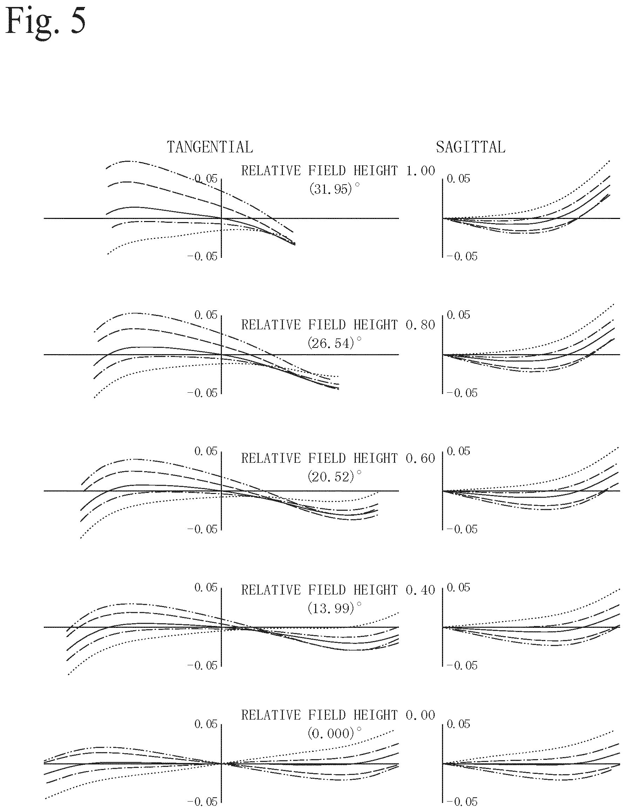

FIG. 4 depicts spherical aberration, astigmatism, and distortion of the optical system 10. Spherical aberration is depicted for a wavelength of 435.8340nm (dot-dot-dash line), a wavelength of 486.1330nm (long dash line), a wavelength of 546.0740nm (solid line), a wavelength of 587.5620nm (dot-dash line), and a wavelength of 656.2730nm (short dash line). Astigmatism is depicted for tangential rays T and sagittal rays S. In FIG. 5, chromatic aberrations of magnification (transverse aberrations) of the optical system 10 are separately depicted for tangential rays and sagittal rays at the respective wavelengths given above. This also applies to the aberration diagrams given later.

Numerical values indicating the main performance of the optical system 10 are given below.

Overall composite focal length (f): 45.027 mm
F number: 3.5
Maximum angle of view (half-angle): 32.6 degrees
Image circle: $\varphi$56 mm
Back focus (BF): 26.88 mm
Overall lens length (LA): 47.48 mm

The image capture optical system 10 is a telephoto type (inverse retrofocus type) optical system with a positive-negative power arrangement where the first lens group G1 with positive refractive power, the stop St, and the second lens group G2 with negative refractive power are disposed in that order from the object side 11, which is typically a lens type where the focal length can be increased but the angle of view is small. With the optical system 10 however, the angle of view is widened by making the front lens (lead lens) L1 closest to (most toward) the object side 11 a negative lens that is concave on the object side 11, and by utilizing the long focal length which is a characteristic advantage of telephoto-type systems, the optical system 10 with a large angle of view and a relatively long back focus BF is provided.

In addition, by disposing the first meniscus lens L2 that has positive refractive power and is convex on the object side 11 adjacent to the negative lens (object-side lens) L1 that is closest to the object side 11, the optical system 10 where a retrofocus-type configuration with negative and positive powers that is suited to a wide-angle lens is produced by the two lenses on the object side 11. This configuration has merit for correction of aberration correction, further the radius of curvature R1 is set within the range of the condition (4) below, where the angle of view is large with a half-angle of 32.6° with a small lens diameter is realized.

$$-1.5 < R1/f < -0.6 \ ... \ (4)$$

Below the lower limit of the condition (4), the absolute value of the radius of curvature R1 increases and the lens diameter becomes large, and since the refractive power falls, it becomes difficult to correct curvature of field and spherical aberration. If the upper limit of the condition (4) is exceeded, the absolute value of the radius of curvature R1 becomes too small, so that it becomes difficult to correct curvature of field, spherical aberration, and distortion. The lower limit of the condition (4) may be -1.3 or may be -1.25, and the upper limit may be -0.8 or may be -1.0.

The second lens group G2 includes the meniscus lens (first meniscus lens) L9 that is disposed closest to (most toward) the image plane side 12, has negative refractive power, and is convex on the image plane side 12 and the meniscus lens (second lens) L8 that is disposed adjacent to and facing the first meniscus lens L9, is concave on the image plane side 12, and in the present embodiment is convex on the object side 11, and has negative refractive power. By disposing the two lenses L9 and L8 with negative refractive power closest to the image plane side 12, a large image circle is obtained relative to the lens diameter on the image plane side 12 and it is possible to achieve a sufficient back focus BF. In addition, by using a negative meniscus lens that is convex on the image plane side 12 as the lens L9 on the image plane side 12, it is easy to increase the image circle relative to the effective diameter of the final lens L9. By using negative meniscus lenses that are disposed so that their concave surfaces face one another as the final lens L9 and the adjacent lens L8, an increase in the Petzval sum is suppressed, which suppresses the occurrence of curvature of field. Accordingly, it is possible to provide the optical system 10 where it is possible to reduce the lens diameter on the image plane side 12 irrespective of the image circle being large, where the lens L1 on the object side can be made even smaller corresponding to this, and that is compact and has favorable aberration correction.

In addition, the second lens group G2 includes a lens (third lens) L7 that has positive refractive power and is convex on the image plane side 12 and is disposed next to and facing the object side 11 of the second lens L8 that has negative refractive power with a minimum air gap d13 in between. By disposing the lens L7 with positive refractive power, it is possible to provide an optical system 10 where the first meniscus lens L9 that is closest to the image plane side 12 can be further miniaturized and aberration correction is also favorable.

This means that the optical system 10 has a large image circle diameter of 56mm corresponding to a large-sized image capture element 5, has a long back focus BF at 26.88mm, and is designed so as to enable use as an interchangeable lens covering a range of focal length from wide angle to a standard condition. Even though the image circle is large and the back focus BF is long, the effective diameter of the lens L1 on the object side 11 that has the largest diameter is small at 24.4mm, the total system length is also short at 47.48mm, and the F number is bright at 3.5, resulting in the optical system 10 as a whole being compact and bright.

The values of the optical system 10 for the conditions (1) to (4) are as follows, with all of the conditions being satisfied. Note that the values in quotation marks indicate the parameters corresponding to the optical system 10 in the present embodiment.

Condition (1) ((RLL1+RLN2)/(RLL1-RLN2), "(R16+R15)/(R16-R15)"): -0.253
Condition (2) (LA/BF): 1.766
Condition (3) (De1/BF): 0.908
Condition (4) (R1/f): -1.213

In addition to the negative lens L1 and the meniscus lens L2 disposed in that order from the object side 11, the first lens group G1 has the first combination lens (in the present embodiment, a cemented lens) C1 that has overall positive refractive power, is disposed facing the aperture stop St, and is composed of two lenses L3 and L4 that are positive and negative respectively. The second lens group G2 has the second combination lens (in the present embodiment, a cemented lens) C2 that has overall positive refractive power, is disposed facing the aperture stop St, and is composed of two lenses L5 and L6 that are negative and positive respectively and disposed so as to be symmetrical to the first combination C1, so that various aberrations including chromatic aberration are favorably corrected.

Second Embodiment

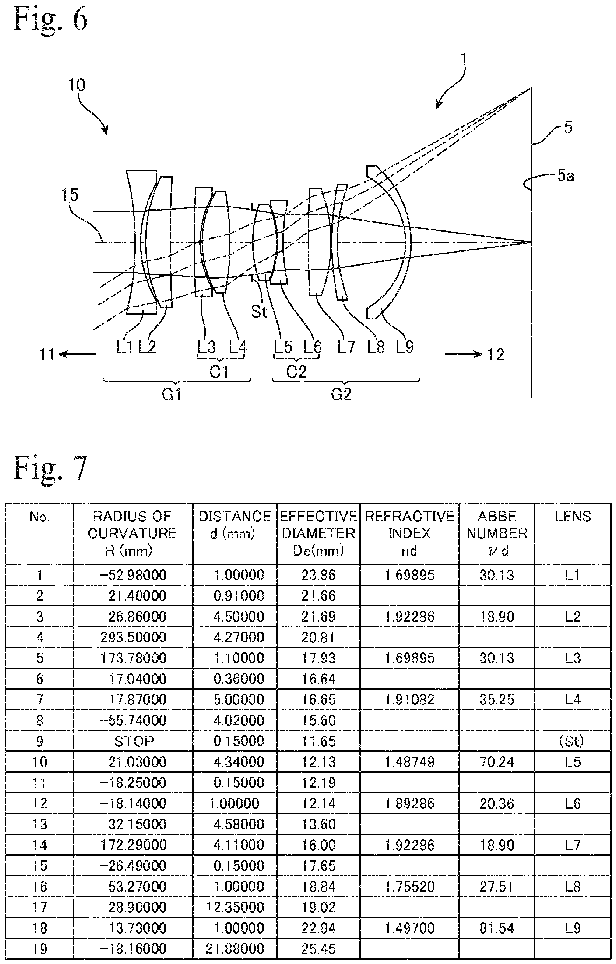

FIG. 6 depicts an example of a camera 1 equipped with another optical system 10 for image capture. In the same way as the optical system (lens system) according to the first embodiment, this optical system 10 is a lens system suited to covering a range of focal length from wide angle to a standard condition, also includes a first lens group G1, which has overall positive refractive power and is disposed on the object side 11, and a second lens group G2, which has overall negative refractive power and is disposed on the image plane side 12, with an aperture stop (stop) St in between. The first lens group G1 has a four-lenses configuration and includes, along the optical axis 15 in order from the object side 11, a biconcave lens (object-side lens) L1 with negative refractive power, a meniscus lens L2 with positive refractive power that is convex on the object side 11, a meniscus lens L3 with negative refractive power that is convex on the object side 11, and a biconvex positive lens L4. The combination (first combination of lenses) C1 of the negative meniscus lens L3 and the positive L4 do not form a cemented lens and are adjacently disposed with a close to minimal air gap. In the present embodiment, the first lens group G1 is composed of four lenses that are arranged in a negative-positive-negative-positive like a retrofocus-type power arrangement that is suited to a wide angle lens system and facilitates achievement of a long back focus.

The second lens group G2 has a five-lenses configuration and includes, along the optical axis 15 in order from the object side 11, a biconvex positive lens L5, a biconcave negative lens L6, a biconvex positive lens L7, a meniscus lens L8 with negative refractive power that is convex on the object side 11, and a meniscus lens L9 with negative refractive power that is convex on the image plane side 12. The combination (second combination of lenses) C2 composed of the positive lens L5 and the negative lens L6 closest to the object side 11 is not a cemented lens and instead has the lenses L5 and L6 disposed with a minimum air gap. The second combination lens C2 has a power arrangement that is symmetrical with the first combination lens C1 with the stop St in between, in the same way as in the first embodiment described earlier. In addition, in this example, the second lens group G2 is constructed of five lenses that are arranged in a positive-negative-positive-negative-negative like a telephoto-type power arrangement. Accordingly, the optical system 10 is constructed of a total of nine lenses with a power arrangement that is symmetrical on both sides of the stop St and is an optical system which as a whole favorably corrects aberration.

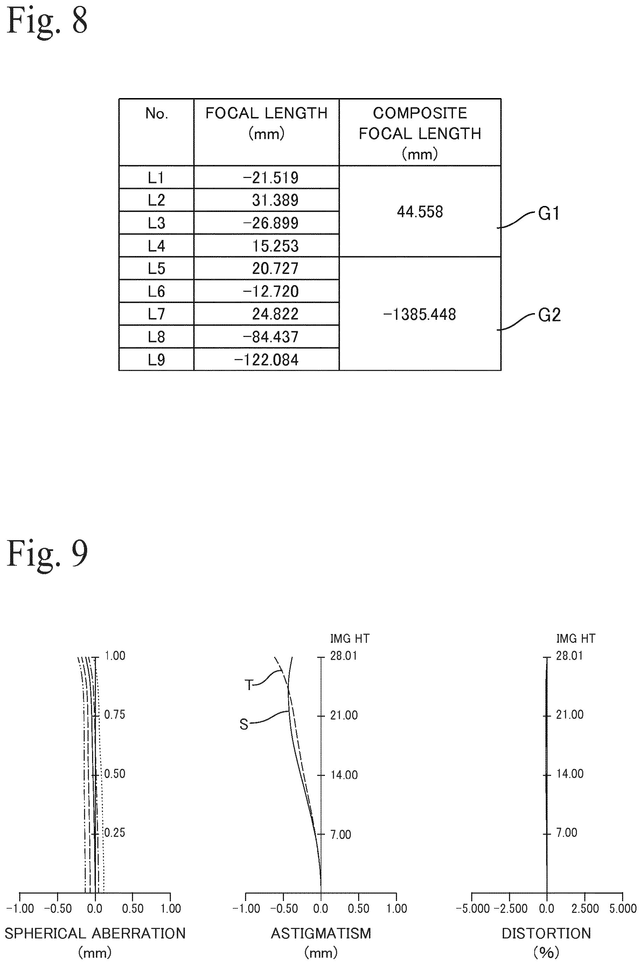

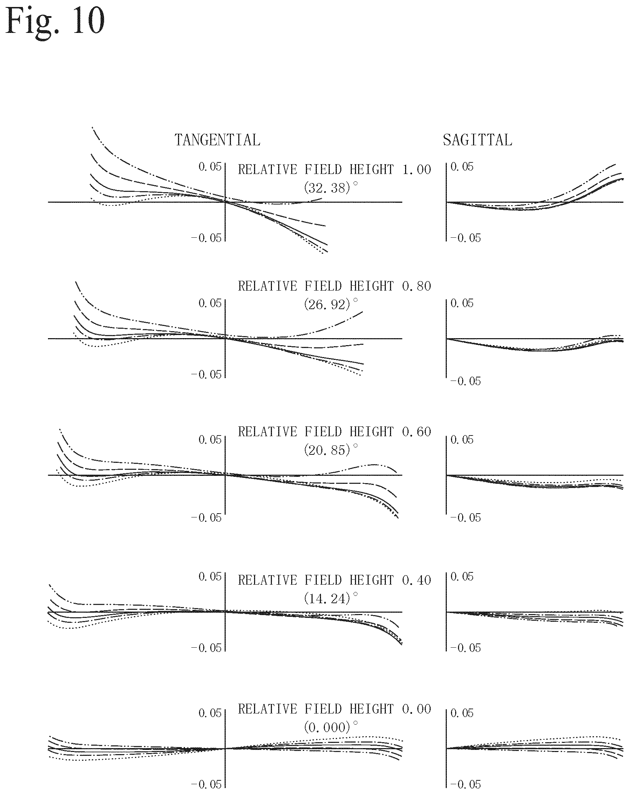

With this optical system 10 also, during focus adjustment (or "focusing"), the entire optical system, that is, the first lens group G1, the aperture stop St, and the second lens group G2 that are disposed in order from the object side 11, integrally moves with respect to the image plane 5a. FIG. 7 depicts data on the respective lenses that construct the optical system 10. FIG. 8 depicts the (d line) focal length (in mm) of each lens and the composite focal length (in mm) of each lens group. FIG. 9 depicts spherical aberration, astigmatism, and distortion of the optical system 10, and in FIG. 10, chromatic aberration of magnification (or "transverse aberration") of the optical system 10 is separately depicted for tangential rays and sagittal rays at the respective wavelengths given earlier.

Numerical values indicating the main performance of the optical system 10 are given below.

Overall composite focal length (f): 44.246 mm
F number: 4.0
Maximum angle of view (half-angle): 32.4 degrees
Image circle: $\varphi$56 mm
Back focus (BF): 21.88 mm
Overall lens length (LA): 49.99 mm

The fundamental configuration of the image capture optical system 10 is the same as the optical system in the first embodiment described earlier, so that there is provided a compact and bright image capture optical system 10 which as a whole is a telephoto-type system, but has a large angle of view and image circle, a comparatively long back focus BF, a short overall length LA, a small lens diameter, and is bright with a low F number. Aberration correction is also favorable.

The values of the optical system 10 for Conditions (1) to (4) are as follows, with all of the conditions being satisfied.

Condition (1) ((RLL1+RLN2)/(RLL1-RLN2), "(R18+R17)/(R18-R17)"): -0.356
Condition (2) (LA/BF): 2.285
Condition (3) (De1/BF): 1.090
Condition (4) (R1/f): -1.197

Third Embodiment

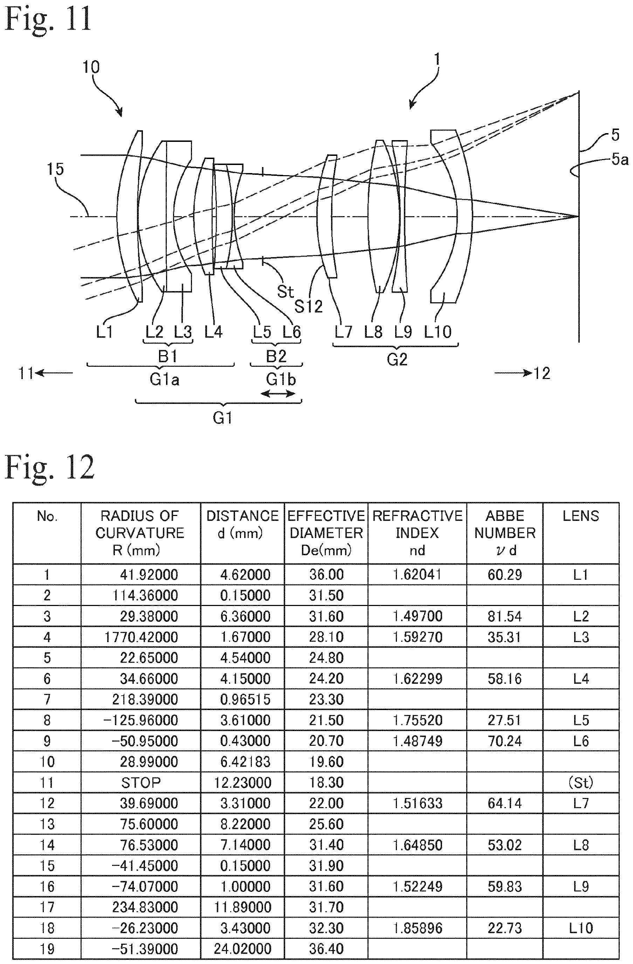

FIG. 11 depicts an example of an image capture apparatus (camera, camera apparatus) with an optical system for image capture. This camera 1 includes an optical system (image capture optical system, image-forming optical system, lens system) 10 and an image capture element (image capture device) 5 that is disposed on the image plane side (image side, image capture side, image forming side) 12 of the optical system 10 and forms the image plane 5a. The optical system 10 consists of a first lens group G1, which is disposed on the object side 11, and a second lens group G2, which is disposed on the image plane side 12, with an aperture stop (stop) St in between. The first lens group G1 includes, in order from the object side 11 toward the image plane 5a, a front group G1a that has overall positive refractive power and a rear group G1b that has overall negative refractive power. The second lens group G2, which is disposed on the image plane side 12 with the aperture stop St in between, has overall positive refractive power. The optical system 10 is an inner-focus type optical system 10 for image capture where during focusing, the front group G1a of the first lens group G1, the aperture stop St, and the second lens group G2 are fixed with respect to the image plane 5a, and the rear group G1b of the first lens group G1 moves.

The front group G1a of the first lens group G1 has a four-lenses configuration and includes, in order from the object side 11 along the optical axis 15, a meniscus lens L1 that has positive refractive power (power may be referred as simply positive or negative) and is convex on the object side 11, a positive meniscus lens L2 that is convex on the object side 11, a negative meniscus lens L3 that is convex on the object side 11, and a positive meniscus lens L4 that is convex on the object side 11. A cemented lens B1 with negative refractive power is constructed by the positive meniscus lens L2 and the negative meniscus lens L3. That is, the front group G1a of the first lens group G1 has a positive-positive-negative-positive or a positive-negative-positive power arrangement.

The rear group G1b of the first lens group G1 has a two-lenses configuration and is composed, along the optical axis 15 in order from the object side 11, of a positive meniscus lens L5 that is convex on the image plane side 12 and a biconcave negative lens L6. A cemented lens B2 with negative refractive power is constructed by the lenses L5 and L6. This cemented lens B2 moves back and forth along the optical axis 15 for focusing purposes.

The second lens group G2 has a four-lenses configuration and is composed, along the optical axis 15 in order from the object side 11, of a positive meniscus lens (stop-side lens) L7 that is convex on the object side 11, a biconvex positive lens (third lens) L8, a biconcave negative lens (second lens) L9, and a negative meniscus lens (first meniscus lens) L10 that is convex on the image plane side 12 and is disposed closest to the image plane side 12. The second lens group G2 has a positive-positive-negative-negative power arrangement. This means that this optical system as a whole consists of ten lenses including two cemented lenses, where on the respective sides of the aperture stop St, the object side 11 has a positive-negative-positive-negative (in lens units, positive, positive, negative, positive, positive, negative) power arrangement and the image plane side 12 has a positive-positive-negative-negative power arrangement, resulting in a so-called "plus-lead" telephoto combination of powers and a power arrangement that produces an overall compact construction.

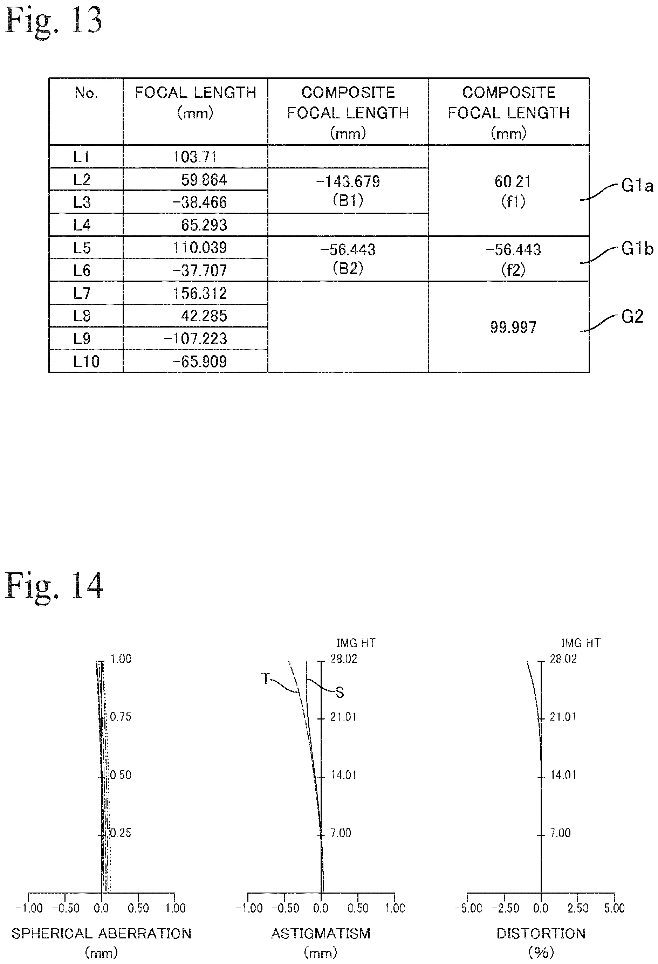

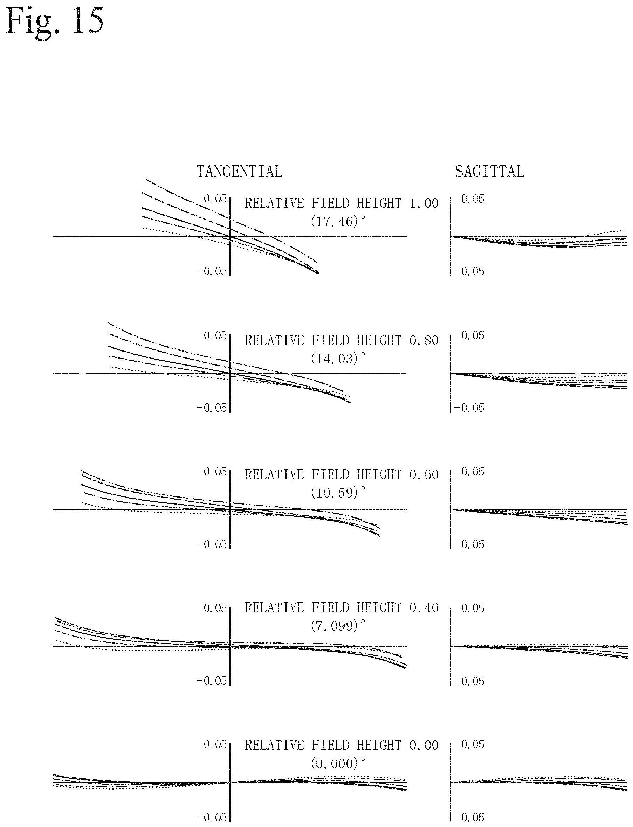

FIG. 12 depicts data on the respective lenses that construct the optical system 10. FIG. 13 depicts the focal length (mm) of each lens, the composite focal length (mm) of each of the cemented lenses B1 and B2, and the composite focal lengths (mm) of the respective lens groups in d-line base. FIG. 14 depicts spherical aberration, astigmatism, and distortion of the optical system 10, and FIG. 15 depicts chromatic aberrations of magnification (transverse aberrations) of the optical system 10 separately for tangential rays and sagittal rays at the respective wavelengths given earlier.

Numerical values indicating the main performance of the optical system 10 are given below.

> Overall composite focal length (f): 89.94mm
> F number: 3.26
> Maximum angle of view (half-field): 17.46 degrees
> Image circle: $\varphi$56 mm
> Back focus (BF): 24.02 mm
> Overall lens length (LA): 80.29 mm

The values of the optical system 10 for the conditions (1) to (3') are as follows, with all of the conditions being satisfied.

> Condition (1) ((RLL1+RLN2)/(RLL1-RLN2), "(R18+R17)/(R18-R17)"): -0.799
> Condition (2') (LA/BF): 3.34
> Condition (3') (De1/BF): 1.50

The optical system 10 has a positive-negative-positive power arrangement that is a telephoto type, in which the front group G1a with positive refractive power, the rear group G1b with negative refractive power, the stop St, and the second lens group G2 with positive power are aligned in order from the object side 11. The optical system 10 is an inner focus-type optical system where the rear group G1b of the first lens group G1 moves during adjustment to the focal length (that is, during focusing). The rear group G1b that performs focusing is constructed of a two-lens configuration with the lenses L5 and L6, or more specifically only the cemented lens B2, which is lightweight and reduces the load of the motor of the optical system 10.

Although it is typically possible to increase the focal length of a telephoto-type optical system, the angle of view is small, so that when the angle of view is increased, the effective diameter of the object side 11 increases. Accordingly, if the effective diameter of the lens on the image plane side 12 is simply increased to realize an image circle as large as $\varphi$56mm as described above for compatibility with a large-sized image capture element 5, this will increase the size of the optical system, resulting in a heavy lens system with a large overall length.

In this optical system 10, the second lens group G2 is constructed, in order from the object side 11, of the lenses L7 (stop-side lens) and L8 (third lens) that have positive refractive power and the lens L9 (second lens) and L10 (first meniscus lens) that have negative refractive power, and by constructing the image plane side 12 of the two lenses L9 and L10 with negative refractive power, it is possible to form a large image circle while suppressing the lens diameter of the image plane side 12. In particular, by using a biconcave negative lens as the second lens L9 from the image plane side 12 and setting the radius of curvature RLN2 (R17) of the surface on the image plane side 12 of the lens L9 in the range of the condition (5) below, it is possible to prevent the angle of light rays incident on the image plane 5a from becoming too large, which makes it possible to form sharper images. This configuration also prevents the back focus BF from becoming excessively long.

$$0.05 < BF/RLN2 < 0.5 \ldots (5)$$

The value of this condition (5) (BF/RLN2, "BF/R17") is 0.102. The upper limit of the condition (5) may be 0.4, which makes it easy to achieve a balance for the correction of aberration.

In the optical system 10, the first meniscus lens L10 with negative power that is convex on the image plane side 12 is disposed closest to the image plane side 12, and a combination of facing surfaces that satisfy the condition (1) is formed by the final two lenses L10 and L9 on the image plane side 12. By such configuration, sufficient negative refractive power is provided by these surfaces, the number of surfaces required for aberration correction is also provided, and it is also possible to suppress increases in curvature of field due to the Petzval sum becoming too large.

By disposing the lens (third lens) L8 with positive refractive power that is third from the image plane side 12 with a minimal air gap d15 from the biconcave negative lens (second lens) L9, the light flux incident on the two final lenses L9 and L10 is narrowed, which suppresses an increase in the diameters of these lenses. Also, by disposing the lens L8 with a positive refractive power that is convex on the image plane side 12 at the minimum air gap d15 adjacent to and fit in the object side 11 of the lens L9 that is concave, making it possible to provide an optical system 10 that is more compact and has favorable aberration correction.

Accordingly, in this optical system 10, as a telephoto type, the diameter De1 of the lens L1 on the object side 11 can be reduced with respect to the diameter De19 of the lens L10 on the image plane side 12, and in the present embodiment, the optical system 10 where the lens L1 closest to the object side 11 is smaller than the lens L10 closest to the image plane side 12 is realized. As one example, the effective diameter De1 of the lens L1 closest to the object side 11 and the effective diameter DeLL2 (De19) of the lens L10 closest to the image plane side 12 may satisfy the condition (6) below.

$$0.9 < De1/DeLL2 < 1.0 \ldots (6)$$

The value of the condition (6) (De1/DeLL2, "De1/De19") of this system 10 is 0.99.

In addition, in the optical system 10, by disposing the lens L7, which has positive refractive power and is suited to gathering light at a position closest to the object side 11 of the second lens group G2 and adjacent to the aperture stop St in a range that satisfies the condition (7), it becomes easier for the second lens group G2 to take in peripheral light and possible to suppress a fall in the angle of view. Accordingly, it is possible to provide an optical system that has a large angle of view and where the effective diameter De1 of the lens L1 closest to the object side 11 of the optical system 10 is small. In this example, it is possible to provide the optical system 10 where the effective diameter De1 of the lens L1 closest to the object side 11 is smaller than the effective diameter De19 of the lens L10 closest to the image plane side 12.

$$0.02 < dS/dI < 0.3 \ldots (7)$$

The distance dS is a distance d11 between the surface 12 on the object side 11 of the lens (stop-side lens) L7 that is adjacent to the aperture stop St, that is, the closest position of the second lens group G2 to the object side 11 and the distance dI is the sum of the distances d12 to d19 between the surface S 12 on the object side 11 of the lens L7 and the image plane 5a. The value of the condition (7) (dS/dI, "d11/(d12 to d19)") of this system 10 is 0.207. When the upper limit of the condition (7) is exceeded, the surface S12 that is closest to the object side 11 out of the second lens group G2 becomes too far from the aperture stop St, which makes it difficult to suppress increases in the diameter of the lenses L10 and L9 on the image plane side 12 and/or difficult to obtain a compact optical system 10. When the lower limit of the condition (7) is exceeded, since the surface S12 on the object side 11 of the stop-side lens L7 becomes too close to the aperture stop St, the ratio of light ray flux (or "light flux") above and below the stop may vary, which makes aberration correction difficult. The lower limit in the condition (7) may be 0.15, which makes aberration correction easier. The upper limit may be 0.25, which makes it possible to further suppress increases in the diameter of the lens L10 on the image plane side 12.

In addition, the relationship between the refractive power (the focal length f2) of the rear group G1b of the first lens group G1 that faces the lens L7 with the aperture stop St in between and performs inner focusing and the refractive power (the focal length fs) of the lens L7 may be set so as to satisfy the condition (8), which means that the refractive power of the stop-side lens L7 of the second lens group G2 can be favorably corrected for aberration and the angle of the light rays with respect to the image plane 5a can be appropriately controlled.

$$0.1 < |f2/fs| < 0.8 \ldots (8)$$

The value of the condition (8) (|f2/fs|, that is the absolute value of ((focal length of rear group G1b)/(focal length of lens L7))) of this system 10 is 0.361. When the upper limit of the condition (8) is exceeded, the refractive power of the stop-side lens L7 becomes too large relative to the refractive power of the rear group G1b of the first lens group G1 that performs focusing, which makes aberration correction difficult. On the other hand, the lower limit of the condition (8) is exceeded, the refractive power of the stop-side lens L7 is too weak, which makes it difficult to control the angle of light rays on the image plane. The lower limit of the condition (8) may be 0.3, which makes it easier to control the angle of light rays on the image plane. The upper limit may be 0.6, which makes aberration correction even easier.

The refractive power (focal length f2) of the rear group G1b of the first lens group G1 may be set so as to satisfy the conditions (9) and (10) with respect to the back focus BF and the refractive power (focal length f1) of the front group G1a, which realizes an optical system 10 where aberration correction can be sufficiently performed at the rear group G1b, where the focusing performance is sufficient, and the overall length LA is shorter. Also, although the rear group G1b is driven by a motor during focusing in the optical system 10, by setting the refractive power of the rear group G1b in a range that satisfies the conditions (9) and (10), it is possible to construct the rear group G1b by two lenses with the lenses L5 and L6, or more specifically only the cemented lens B2, which is lightweight and reduces the load of the motor of the optical system 10.

$$-10 < f2/BF < -1.4 \quad \dots (9)$$

$$-1.5 < f2/f1 < -0.7 \dots (10)$$

The value of the condition (9) of this system 10 is -2.35 and the value of Condition (10) is -0.937. When the upper limits of the conditions (9) and (10) are exceeded, the power of the rear group G1b is too strong, so that aberration is excessively corrected. When the lower limits of the conditions (9) and (10) are exceeded, the refractive power of the rear group G1b is too weak, so that the focusing effect is weak, the movement distance increases, and the lens length increases. The lower limit of the condition (9) may be -4 and the lower limit of the condition (10) may be -1.3. This further suppresses increases in the lens length. The lower limit of the condition (10) may be -0.8, which can prevent aberration correction from becoming excessive.

The optical system 10 according to the present embodiment is a lens system (optical system) 10 that is compact as a whole and has a short overall length LA, has a small lens diameter, achieves a comparatively long back focus BF in spite of the image circle diameter being as large as $\varphi$56mm, and has a lens L1 closest to (most toward) the object side 11 that is small compared to the back focus BF. In addition, the optical system 10 has a large angle of view as a telephoto type, that is, a half-angle of 17.46 degrees, is bright with an F number of 3.26, and is favorable as an interchangeable lens or the like.

Fourth Embodiment

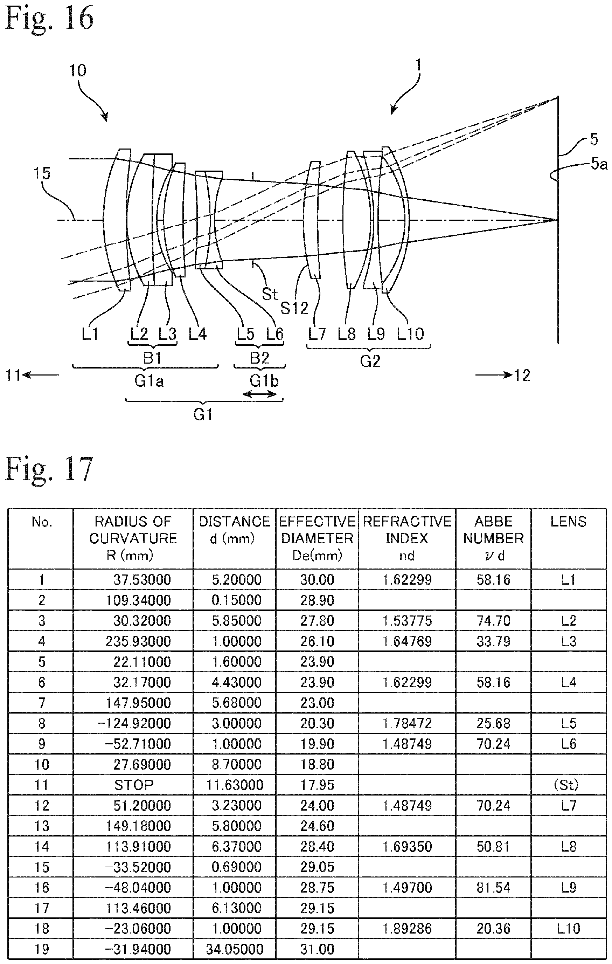

FIG. 16 depicts an example of a camera 1 with yet another optical system 10 for image capture. The optical system 10 has the same configuration as the optical system 10 in the third embodiment, and includes a first lens group G1, which is disposed on the object side 11, and a second lens group G2, which is disposed on the image plane side 12, with an aperture stop St in between. The first lens group G1 includes a front group G1a that has overall positive refractive power on the object side 11 and a rear group G1b that has overall negative refractive power. The second lens group G2 is a lens group that has overall positive refractive power. The optical system 10 is an inner-focus type optical system 10 for image capture where the rear group G1b moves during focusing. The front group G1a of the first lens group G1 consists of four lenses, the rear group G1b consists of two lenses, and the second lens group G2 consists of four lenses, and since the fundamental lens configurations of the respective groups are the same as in the optical system according to the third embodiment, description thereof is omitted here.

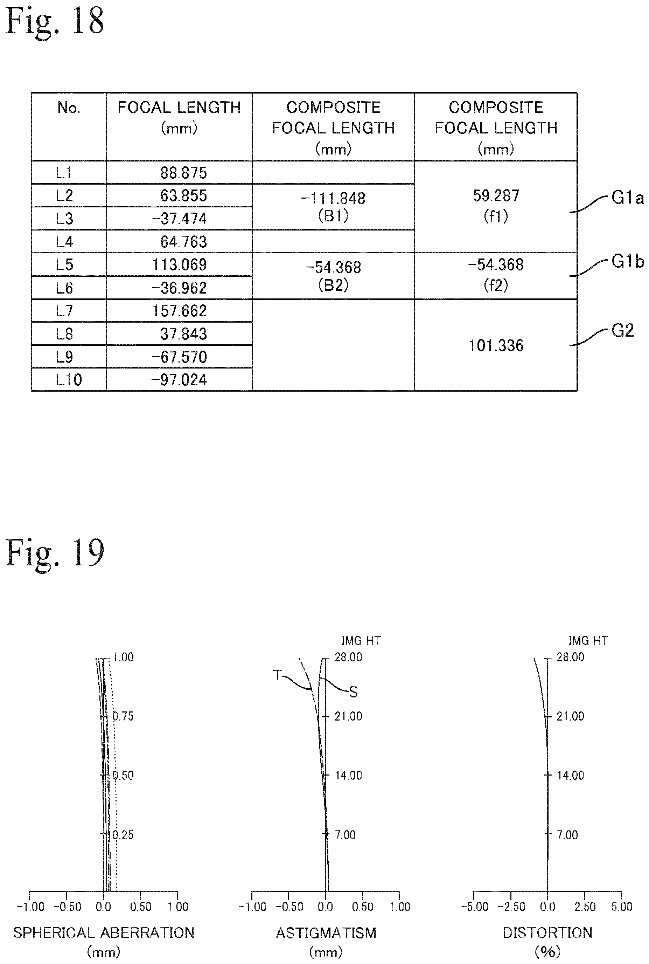

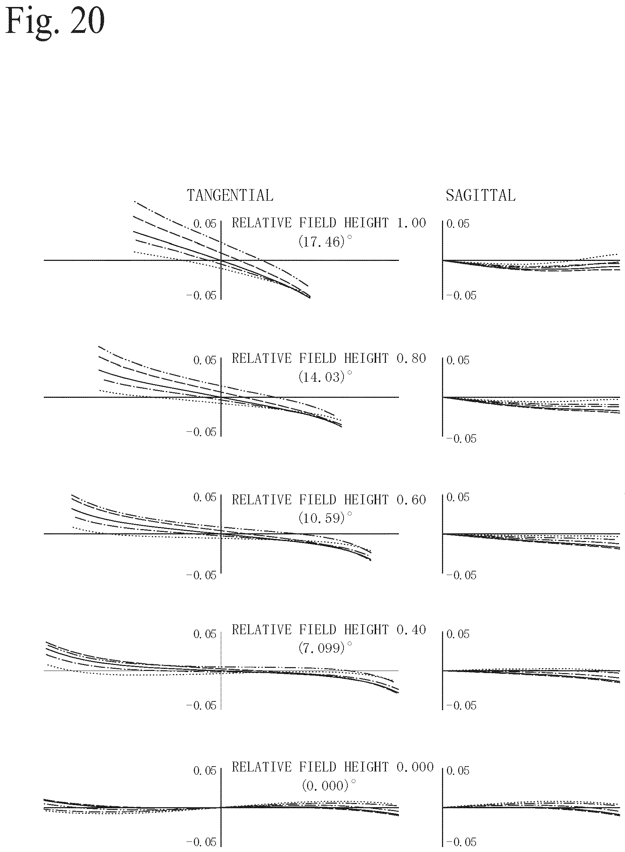

FIG. 17 depicts data on the respective lenses that construct the optical system 10. FIG. 18 depicts the focal length (in mm) of each lens and the composite focal length (in mm) of each lens group based on d-line. FIG. 19 depicts spherical aberration, astigmatism, and distortion of the optical system 10, and in FIG. 20, chromatic aberrations of magnification (transverse aberrations) of the optical system 10 are separately depicted for tangential rays and sagittal rays at the respective wavelengths given above.

Numerical values indicating the main performance of the optical system 10 are given below.

Overall composite focal length (f): 95.19 mm
F number: 3.4
Maximum angle of view (half-angle): 16.55 degrees
Image circle: $\varphi$56 mm
Back focus (BF): 34.05 mm
Overall lens length (LA): 72.46 mm

The values of the optical system 10 for the conditions (1) to (3') and (5) to (10) are as follows, with all of the conditions being satisfied. Note that the values in quotation marks indicate the parameters corresponding to the optical system 10 in the present embodiment.

Condition (1) ((RLL1+RLN2)/(RLL1-RLN2), "(R18+R17)/(R18-R17)"): -0.662
Condition (2') (LA/BF): 2.13
Condition (3') (De1/BF): 0.88
Condition (5) (BF/RLN2, "BF/R17"): 0.300
Condition (6) (De1/DeLL2, De1/De19"): 0.97
Condition (7) (dS/dI, "d11/(d12 to d19)"): 0.200
Condition (8) (|f2/fs|, "|f2/fL7|"): 0.345
Condition (9) (f2/BF): -1.60
Condition (10) (f2/f1): -0.917

As explained above, the optical systems (lens systems) 10 disclosed above all relate to image capture optical apparatuses and digital appliances and are wide-aperture, compact optical systems 10 that are suited to an interchangeable lens digital camera, a video camera, a TV camera, an action camera, or the like that captures images of scenery or a subject using an image capture element. In particular, it is possible to provide an optical system 10 which is suited to a lens system with a large image circle for use with a large image capture element 5, which has a simple construction of nine or ten lenses but achieves a sufficient performance in a range of focal length from a wide angle to a standard condition for the first and second embodiments and as a telephoto lens for the third and fourth embodiments, which also has a small lens diameter and a short overall lens length LA while having a long back focus BF, and which is bright, wide-angle, and has favorable aberration correction.

**Claims**

1. An optical system for image capture consisting of a first lens group disposed on an object side with respect to an aperture stop, and a second lens group disposed on an image plane side with respect to the aperture stop, wherein the second lens group includes:

   a first meniscus lens with negative refractive power that is convex on the image plane side and is disposed closest to the image plane side; and
   a second lens with negative refractive power that is concave on the image plane side and is disposed adjacent to and facing the object side of the first meniscus lens.

2. The optical system according to claim 1, wherein a radius of curvature RLL1 of a surface on the object side of the first meniscus lens and a radius of curvature RLN2 of a surface on the image plane side of the second lens satisfy a condition below.

$$-1.0 < (RLL1+RLN2)/(RLL1-RLN2) < -0.1$$

3. The optical system according to claim 1 or 2, wherein the second lens group includes a third lens that has positive refractive power, is convex on an image plane side, and is disposed adjacent to and facing the object side of the second lens.

4. The optical system according to claim 3, wherein the third lens is disposed with a minimal gap from the second lens.

5. The optical system according to any one of claims 1 to 4, wherein the first lens group has overall positive refractive power, includes an object-side lens with negative refractive power that is concave on the object side and is disposed most toward the object side, and a meniscus lens with positive refractive power that is convex on the object side and is disposed adjacent to the object-side lens, and the second lens group has overall negative refractive power.

6. The optical system according to claim 5, wherein an overall length LA of the optical system, an effective diameter De1 on a surface on the object side of the object-side lens, and a back focus BF satisfy conditions given below.

$$1.5 < LA/BF < 2.5$$

$$0.6 < De1/BF < 1.5$$

7. The optical system according to any one of claims 1 to 4,
   wherein the first lens group includes, in order from the object side toward the image plane side, a front group with overall positive refractive power, and a rear group with overall negative refractive power, and
   the second lens group has overall positive refractive power.

8. The optical system according to claim 7,
   wherein an overall length LA of the optical system, an effective diameter De1 of a surface on the object side of an object-side lens that is disposed most toward the object side in the first lens group, and a back focus BF satisfy conditions below.

$$1.5 < LA/BF < 5.0$$

$$0.8 < De1/BF < 2.0$$

9. An image capture apparatus comprising:

   the optical system according to any one of claims 1 to 8; and
   an image capture element disposed on the image plane side of the optical system.

# Fig. 1

# Fig. 2

| No. | RADIUS OF CURVATURE R (mm) | DISTANCE d (mm) | EFFECTIVE DIAMETER De(mm) | REFRACTIVE INDEX nd | ABBE NUMBER $\nu$ d | LENS |
|---|---|---|---|---|---|---|
| 1 | −54.60800 | 1.00000 | 24.40 | 1.54814 | 45.78 | L1 |
| 2 | 18.80100 | 2.13000 | 21.50 | | | |
| 3 | 40.82900 | 3.40000 | 21.50 | 1.91650 | 31.60 | L2 |
| 4 | 212.80200 | 6.47000 | 20.80 | | | |
| 5 | 22.50800 | 5.20000 | 17.00 | 1.69700 | 48.52 | L3 |
| 6 | −26.02800 | 1.00000 | 16.60 | 1.69895 | 30.13 | L4 |
| 7 | −52.29800 | 2.92000 | 16.20 | | | |
| 8 | STOP | 5.05000 | 14.20 | | | (St) |
| 9 | −22.88600 | 1.00000 | 13.90 | 1.85026 | 32.27 | L5 |
| 10 | 16.76900 | 5.20000 | 14.90 | 1.64850 | 53.02 | L6 |
| 11 | −26.74000 | 0.93000 | 16.20 | | | |
| 12 | 44.60800 | 4.40000 | 17.60 | 1.85026 | 32.27 | L7 |
| 13 | −51.30000 | 0.15000 | 18.40 | | | |
| 14 | 43.10400 | 1.00000 | 19.00 | 1.83481 | 42.72 | L8 |
| 15 | 22.50000 | 6.63000 | 18.90 | | | |
| 16 | −13.41600 | 1.00000 | 19.20 | 1.48749 | 70.24 | L9 |
| 17 | −21.58300 | 26.88000 | 21.60 | | | |

# Fig. 3

| No. | FOCAL LENGTH (mm) | COMPOSITE FOCAL LENGTH (mm) | COMPOSITE FOCAL LENGTH (mm) | |
|---|---|---|---|---|
| L1 | −25.261 | | | |
| L2 | 54.202 | | 28.87 | G1 |
| L3 | 18.028 | 23.268 (C1) | | |
| L4 | −74.734 | | | |
| L5 | −11.17 | −47.123 (C2) | | G2 |
| L6 | 16.603 | | | |
| L7 | 28.461 | | −71.66 | |
| L8 | −57.436 | | | |
| L9 | −75.523 | | | |

# Fig. 4

SPHERICAL ABERRATION (mm)

ASTIGMATISM (mm)

DISTORTION (%)

Fig. 5

TANGENTIAL                                    SAGITTAL

RELATIVE FIELD HEIGHT 1.00
(31.95)°

RELATIVE FIELD HEIGHT 0.80
(26.54)°

RELATIVE FIELD HEIGHT 0.60
(20.52)°

RELATIVE FIELD HEIGHT 0.40
(13.99)°

RELATIVE FIELD HEIGHT 0.00
(0.000)°

# Fig. 6

# Fig. 7

| No. | RADIUS OF CURVATURE R (mm) | DISTANCE d (mm) | EFFECTIVE DIAMETER De(mm) | REFRACTIVE INDEX nd | ABBE NUMBER νd | LENS |
|---|---|---|---|---|---|---|
| 1 | −52.98000 | 1.00000 | 23.86 | 1.69895 | 30.13 | L1 |
| 2 | 21.40000 | 0.91000 | 21.66 | | | |
| 3 | 26.86000 | 4.50000 | 21.69 | 1.92286 | 18.90 | L2 |
| 4 | 293.50000 | 4.27000 | 20.81 | | | |
| 5 | 173.78000 | 1.10000 | 17.93 | 1.69895 | 30.13 | L3 |
| 6 | 17.04000 | 0.36000 | 16.64 | | | |
| 7 | 17.87000 | 5.00000 | 16.65 | 1.91082 | 35.25 | L4 |
| 8 | −55.74000 | 4.02000 | 15.60 | | | |
| 9 | STOP | 0.15000 | 11.65 | | | (St) |
| 10 | 21.03000 | 4.34000 | 12.13 | 1.48749 | 70.24 | L5 |
| 11 | −18.25000 | 0.15000 | 12.19 | | | |
| 12 | −18.14000 | 1.00000 | 12.14 | 1.89286 | 20.36 | L6 |
| 13 | 32.15000 | 4.58000 | 13.60 | | | |
| 14 | 172.29000 | 4.11000 | 16.00 | 1.92286 | 18.90 | L7 |
| 15 | −26.49000 | 0.15000 | 17.65 | | | |
| 16 | 53.27000 | 1.00000 | 18.84 | 1.75520 | 27.51 | L8 |
| 17 | 28.90000 | 12.35000 | 19.02 | | | |
| 18 | −13.73000 | 1.00000 | 22.84 | 1.49700 | 81.54 | L9 |
| 19 | −18.16000 | 21.88000 | 25.45 | | | |

Fig. 8

| No. | FOCAL LENGTH (mm) | COMPOSITE FOCAL LENGTH (mm) | |
|---|---|---|---|
| L1 | −21.519 | 44.558 | ⎫ G1 |
| L2 | 31.389 | | |
| L3 | −26.899 | | |
| L4 | 15.253 | | |
| L5 | 20.727 | −1385.448 | ⎫ G2 |
| L6 | −12.720 | | |
| L7 | 24.822 | | |
| L8 | −84.437 | | |
| L9 | −122.084 | | |

Fig. 9

SPHERICAL ABERRATION (mm)

ASTIGMATISM (mm)

DISTORTION (%)

# Fig. 10

TANGENTIAL                           SAGITTAL

RELATIVE FIELD HEIGHT 1.00
(32.38)°

RELATIVE FIELD HEIGHT 0.80
(26.92)°

RELATIVE FIELD HEIGHT 0.60
(20.85)°

RELATIVE FIELD HEIGHT 0.40
(14.24)°

RELATIVE FIELD HEIGHT 0.00
(0.000)°

# Fig. 11

# Fig. 12

| No. | RADIUS OF CURVATURE R (mm) | DISTANCE d (mm) | EFFECTIVE DIAMETER De(mm) | REFRACTIVE INDEX nd | ABBE NUMBER $\nu$ d | LENS |
|---|---|---|---|---|---|---|
| 1 | 41.92000 | 4.62000 | 36.00 | 1.62041 | 60.29 | L1 |
| 2 | 114.36000 | 0.15000 | 31.50 | | | |
| 3 | 29.38000 | 6.36000 | 31.60 | 1.49700 | 81.54 | L2 |
| 4 | 1770.42000 | 1.67000 | 28.10 | 1.59270 | 35.31 | L3 |
| 5 | 22.65000 | 4.54000 | 24.80 | | | |
| 6 | 34.66000 | 4.15000 | 24.20 | 1.62299 | 58.16 | L4 |
| 7 | 218.39000 | 0.96515 | 23.30 | | | |
| 8 | −125.96000 | 3.61000 | 21.50 | 1.75520 | 27.51 | L5 |
| 9 | −50.95000 | 0.43000 | 20.70 | 1.48749 | 70.24 | L6 |
| 10 | 28.99000 | 6.42183 | 19.60 | | | |
| 11 | STOP | 12.23000 | 18.30 | | | (St) |
| 12 | 39.69000 | 3.31000 | 22.00 | 1.51633 | 64.14 | L7 |
| 13 | 75.60000 | 8.22000 | 25.60 | | | |
| 14 | 76.53000 | 7.14000 | 31.40 | 1.64850 | 53.02 | L8 |
| 15 | −41.45000 | 0.15000 | 31.90 | | | |
| 16 | −74.07000 | 1.00000 | 31.60 | 1.52249 | 59.83 | L9 |
| 17 | 234.83000 | 11.89000 | 31.70 | | | |
| 18 | −26.23000 | 3.43000 | 32.30 | 1.85896 | 22.73 | L10 |
| 19 | −51.39000 | 24.02000 | 36.40 | | | |

# Fig. 13

| No. | FOCAL LENGTH (mm) | COMPOSITE FOCAL LENGTH (mm) | COMPOSITE FOCAL LENGTH (mm) | |
|---|---|---|---|---|
| L1 | 103.71 | | | |
| L2 | 59.864 | −143.679 (B1) | 60.21 (f1) | G1a |
| L3 | −38.466 | | | |
| L4 | 65.293 | | | |
| L5 | 110.039 | −56.443 (B2) | −56.443 (f2) | G1b |
| L6 | −37.707 | | | |
| L7 | 156.312 | | | |
| L8 | 42.285 | | 99.997 | G2 |
| L9 | −107.223 | | | |
| L10 | −65.909 | | | |

# Fig. 14

IMG HT

SPHERICAL ABERRATION (mm)

ASTIGMATISM (mm)

DISTORTION (%)

Fig. 15

TANGENTIAL                                    SAGITTAL

0.05    RELATIVE FIELD HEIGHT 1.00    0.05
             (17.46)°

-0.05                                   -0.05

0.05    RELATIVE FIELD HEIGHT 0.80    0.05
             (14.03)°

-0.05                                   -0.05

0.05    RELATIVE FIELD HEIGHT 0.60    0.05
             (10.59)°

-0.05                                   -0.05

0.05    RELATIVE FIELD HEIGHT 0.40    0.05
             (7.099)°

-0.05                                   -0.05

0.05    RELATIVE FIELD HEIGHT 0.00    0.05
             (0.000)°

-0.05                                   -0.05

# Fig. 16

# Fig. 17

| No. | RADIUS OF CURVATURE R (mm) | DISTANCE d (mm) | EFFECTIVE DIAMETER De(mm) | REFRACTIVE INDEX nd | ABBE NUMBER ν d | LENS |
|---|---|---|---|---|---|---|
| 1 | 37.53000 | 5.20000 | 30.00 | 1.62299 | 58.16 | L1 |
| 2 | 109.34000 | 0.15000 | 28.90 | | | |
| 3 | 30.32000 | 5.85000 | 27.80 | 1.53775 | 74.70 | L2 |
| 4 | 235.93000 | 1.00000 | 26.10 | 1.64769 | 33.79 | L3 |
| 5 | 22.11000 | 1.60000 | 23.90 | | | |
| 6 | 32.17000 | 4.43000 | 23.90 | 1.62299 | 58.16 | L4 |
| 7 | 147.95000 | 5.68000 | 23.00 | | | |
| 8 | −124.92000 | 3.00000 | 20.30 | 1.78472 | 25.68 | L5 |
| 9 | −52.71000 | 1.00000 | 19.90 | 1.48749 | 70.24 | L6 |
| 10 | 27.69000 | 8.70000 | 18.80 | | | |
| 11 | STOP | 11.63000 | 17.95 | | | (St) |
| 12 | 51.20000 | 3.23000 | 24.00 | 1.48749 | 70.24 | L7 |
| 13 | 149.18000 | 5.80000 | 24.60 | | | |
| 14 | 113.91000 | 6.37000 | 28.40 | 1.69350 | 50.81 | L8 |
| 15 | −33.52000 | 0.69000 | 29.05 | | | |
| 16 | −48.04000 | 1.00000 | 28.75 | 1.49700 | 81.54 | L9 |
| 17 | 113.46000 | 6.13000 | 29.15 | | | |
| 18 | −23.06000 | 1.00000 | 29.15 | 1.89286 | 20.36 | L10 |
| 19 | −31.94000 | 34.05000 | 31.00 | | | |

# Fig. 18

| No. | FOCAL LENGTH (mm) | COMPOSITE FOCAL LENGTH (mm) | COMPOSITE FOCAL LENGTH (mm) | |
|---|---|---|---|---|
| L1 | 88.875 | | | |
| L2 | 63.855 | −111.848 (B1) | 59.287 (f1) | G1a |
| L3 | −37.474 | | | |
| L4 | 64.763 | | | |
| L5 | 113.069 | −54.368 (B2) | −54.368 (f2) | G1b |
| L6 | −36.962 | | | |
| L7 | 157.662 | | | |
| L8 | 37.843 | | 101.336 | G2 |
| L9 | −67.570 | | | |
| L10 | −97.024 | | | |

# Fig. 19

SPHERICAL ABERRATION (mm)

ASTIGMATISM (mm)

DISTORTION (%)

# Fig. 20

TANGENTIAL                                          SAGITTAL

RELATIVE FIELD HEIGHT 1.00
(17.46)°

RELATIVE FIELD HEIGHT 0.80
(14.03)°

RELATIVE FIELD HEIGHT 0.60
(10.59)°

RELATIVE FIELD HEIGHT 0.40
(7.099)°

RELATIVE FIELD HEIGHT 0.000
(0.000)°

**INTERNATIONAL SEARCH REPORT**

International application No.

PCT/JP2017/022757

A.　CLASSIFICATION OF SUBJECT MATTER
*G02B13/02*(2006.01)i

According to International Patent Classification (IPC) or to both national classification and IPC

B.　FIELDS SEARCHED

Minimum documentation searched (classification system followed by classification symbols)
G02B13/02

Documentation searched other than minimum documentation to the extent that such documents are included in the fields searched
　　Jitsuyo Shinan Koho　　　　1922-1996　Jitsuyo Shinan Toroku Koho　1996-2017
　　Kokai Jitsuyo Shinan Koho　1971-2017　Toroku Jitsuyo Shinan Koho　1994-2017

Electronic data base consulted during the international search (name of data base and, where practicable, search terms used)

C.　DOCUMENTS CONSIDERED TO BE RELEVANT

| Category* | Citation of document, with indication, where appropriate, of the relevant passages | Relevant to claim No. |
|---|---|---|
| X | JP 2015-111254 A  (Olympus Corp.), 18 June 2015 (18.06.2015), columns concerning 'numerical example 2', 'numerical example 6' & US 2015/0130985 A1 columns concerning 'example 2', 'example 6' & US 2016/0209630 A1　　& CN 104635319 A & CN 106970458 A | 1-4,7-9 |
| X | JP 2015-96915 A  (Tamron Co., Ltd.), 21 May 2015 (21.05.2015), columns concerning 'example 1' to 'example 3', 'example 5' (Family: none) | 1-4,7-9 |

☒　Further documents are listed in the continuation of Box C.　　　☐　See patent family annex.

*　　Special categories of cited documents:
"A"　document defining the general state of the art which is not considered　to be of particular relevance
"E"　earlier application or patent but published on or after the international filing date
"L"　document which may throw doubts on priority claim(s) or which is cited to establish the publication date of another citation or other special reason (as specified)
"O"　document referring to an oral disclosure, use, exhibition or other means
"P"　document published prior to the international filing date but later than the priority date claimed

"T"　later document published after the international filing date or priority date and not in conflict with the application but cited to understand the principle or theory underlying the invention
"X"　document of particular relevance; the claimed invention cannot be considered novel or cannot be considered to involve an inventive step when the document is taken alone
"Y"　document of particular relevance; the claimed invention cannot be considered to involve an inventive step when the document is combined with one or more other such documents, such combination being obvious to a person skilled in the art
"&"　document member of the same patent family

Date of the actual completion of the international search
　　07 September 2017 (07.09.17)

Date of mailing of the international search report
　　19 September 2017 (19.09.17)

Name and mailing address of the ISA/
　　Japan Patent Office
　　3-4-3,Kasumigaseki,Chiyoda-ku,
　　Tokyo 100-8915,Japan

Authorized officer

Telephone No.

Form PCT/ISA/210 (second sheet) (January 2015)

**INTERNATIONAL SEARCH REPORT**

International application No.

PCT/JP2017/022757

C (Continuation).   DOCUMENTS CONSIDERED TO BE RELEVANT

| Category* | Citation of document, with indication, where appropriate, of the relevant passages | Relevant to claim No. |
|---|---|---|
| X | JP 5-173064 A  (Minolta Camera Co., Ltd.),<br>13 July 1993 (13.07.1993),<br>columns concerning 'example 1' to 'example 4'<br>(Family: none) | 1-4,7-9 |
| X | JP 2001-33704 A  (Sigma Corp.),<br>09 February 2001 (09.02.2001),<br>columns concerning 'example 1' to 'example 3'<br>(Family: none) | 1-2,7-9 |
| X | JP 6-222260 A  (Minolta Camera Co., Ltd.),<br>12 August 1994 (12.08.1994),<br>columns concerning 'example 1' to 'example 4',<br>'example 6'<br>(Family: none) | 1-4,9 |
| X | WO 2014/118865 A1  (Panasonic Intellectual<br>Property Management Co., Ltd.),<br>07 August 2014 (07.08.2014),<br>columns concerning 'numerical example 4' to<br>'numerical example 5'<br>& US 2015/0312454 A1<br>columns concerning 'numerical example 4' to<br>'numerical example 5'<br>& CN 104969109 A | 1-4,9 |
| X | JP 11-326756 A  (Cosina Co., Ltd.),<br>26 November 1999 (26.11.1999),<br>column concerning '3rd example'<br>(Family: none) | 1-4,9 |
| X | JP 2014-59466 A  (Ricoh Co., Ltd.),<br>03 April 2014 (03.04.2014),<br>columns concerning 'example 1' to 'example 6',<br>'example 9' to 'example 10'<br>& US 9104010 B2<br>columns concerning 'example 1' to 'example 6',<br>'example 9' to 'example 10'<br>& EP 2708930 A1        & CN 103676093 A | 1-4,9 |
| X | JP 11-281890 A  (Konica Corp.),<br>15 October 1999 (15.10.1999),<br>columns concerning 'example 1' to 'example 2',<br>'example 4' to 'example 5'<br>& US 6185050 B1<br>columns concerning 'example 1' to 'example 2',<br>'example 4' to 'example 5' | 1-3,5-6,9 |

Form PCT/ISA/210 (continuation of second sheet) (January 2015)

**INTERNATIONAL SEARCH REPORT**

International application No.

PCT/JP2017/022757

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2-238416 A (Canon Inc.),<br>20 September 1990 (20.09.1990),<br>columns concerning 'example 1' to 'example 2',<br>'example 4' to 'example 10'<br>& US 5289317 A1<br>columns concerning 'numerical example 9' to<br>'numerical example 10', 'numerical example 12'<br>to 'numerical example 17' | 1-6,9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002107616 A